# EUROPEAN PATENT APPLICATION

(11) **EP 3 267 190 A1**
(43) Date of publication of application: **10.01.2018**
(21) Application number: 16758628.8
(22) Date of filing: 01.03.2016
(51) Int. Cl.: G01N 29/04, G01N 29/265

(54) **DEFECT INSPECTION DEVICE, DEFECT INSPECTION METHOD, AND PROGRAM**

(30) Priority: 04.03.2015 JP 2015042177
(71) Applicant: NEC Corporation, Tokyo 108-8001 (JP)
(72) Inventor: SHIMIZU, Motoaki, Tokyo 108-8001 (JP)
(74) Representative: Vossius & Partner Patentanwälte Rechtsanwälte mbB
(86) International application number: PCT/JP2016/001097
(87) International publication number: WO 2016/139930

(57) **Abstract**

An object of the present invention is to provide a defect inspection device capable of surely guiding a moving means on an inspection structure when a flying body is used as the moving means, and capable of performing defect inspection such as tapping the inspection structure, the device including: a moving unit 11 capable of freely moving in the space; an inspection unit 12 that inspects a wall surface of an inspection target area of the inspection structure; an arm unit 16 to which the inspection unit 12 is attached at one end; a directing unit 13 that controls a direction of the inspection unit 12 by rotating the arm unit 16; and a wheel unit 20 that guides a movement of the moving unit 11 on the inspection structure.

## Description

### [Technical Field]

The present invention relates to a defect inspection device, a defect inspection method, and a program suitable for use in defect inspection of structures such as tunnels and bridges.

### [Background Art]

As a defect inspection device for inspecting defects over wall surfaces of inspection structures such as tunnels and bridges using a moving body, defect inspection devices as described in PTL 1, PTL 2, and PTL 3 are known. PTL 1 discloses a defect inspection device having a moving device mounted on a vehicle and configured to inspect a tunnel state by moving a tracking vehicle at a predetermined speed to pick up a tapping sound while causing a head to follow an inspection surface. PTL 2 discloses a defect inspection device having a post mounted on a general vehicle such as a truck, and having a hammer attached to an end of an arm at an upper end of the post, and configured to inspect a tunnel state by tapping a surface of a tunnel lining concrete. PTL 3 discloses a defect inspection device configured to inspect a tunnel state by setting a robot body in a movable state by a moving cart, the moving cart including an arm mechanism and an inspection mechanism part, etc., and making the inspection mechanism part reach a desired position on a wall surface.

### [Citation List]

### [Patent Literature]

[PTL 1] Japanese Laid-open Patent Publication No. 2001-349876
[PTL 2] Japanese Laid-open Patent Publication No. 2004-205216
[PTL 3] Japanese Laid-open Patent Publication No. 2004-301665
[PTL 4] Japanese Laid-open Patent Publication No. 2012-145346

### [Summary of Invention]

### [Technical Problem]

However, the moving bodies disclosed in PTL 1 to PTL 3 are assumed to be vehicles traveling on the ground. For the vehicles traveling on the ground, it is difficult to easily inspect the wall surfaces of tunnels and bridges.

Further, in a case of a flying body, it moves in the space, and therefore it is difficult to surely make an inspection device brought into contact with an inspection target area of an inspection structure, and to perform inspection such as tapping. Therefore, it is conceivable to attach a guide wheel or the like to the inspection device to stabilize a movement of the inspection device. However, when a large number of guide wheels are mounted, there is a problem that a weight becomes heavy and floating of the flying body becomes difficult. In the wall surface inspection robot disclosed in PTL 3, both moving unit and the inspection unit have guide wheels, and the number of the wheels is increased.

An object of the present invention is to provide a defect inspection device, a defect inspection method and a program capable of solving the abovementioned problem.

### [Solution to Problem]

In order to solve the abovementioned problem, according to an aspect of the present invention, there is provided a defect inspection device, including:
a moving means capable of freely moving in the space;
an inspection means for inspecting a wall surface of an inspection target area of an inspection structure;
an arm means to which the inspection means is attached at one end; and
a directing means for controlling a direction of the inspection means by rotating the arm means; and
a guide means that guides a movement of the moving means on the inspection structure.

According to an aspect of the present invention, there is provided a defect inspection method using a defect inspection device including: a moving means capable of freely moving in the space;
an inspection means for inspecting a wall surface of an inspection target area of an inspection structure;
an arm means to which the inspection means is attached at one end;
a directing means for controlling a direction of the inspection means by rotating the arm means; and
a guide means for guiding a movement of the moving means on the inspection structure, the method including:
making the inspection means brought close to the inspection target area of the inspection structure by the moving means; and
making the guide means brought into contact with the inspection structure, and moving the inspection means to the inspection target area of the inspection structure by the guide means, to thereby inspect the wall surface of the inspection structure by the inspection means.

According to an aspect of the present invention, there is provided a defect inspection program, which causes a computer of a defect inspection device including
a moving means capable of freely moving in the space;
an inspection means for inspecting a wall surface of an inspection target area of an inspection structure;
an arm means to which the inspection means is attached at one end;
a directing means for controlling a direction of the inspection means by rotating the arm means; and
a guide means for guiding a movement of the moving means on the inspection structure, to function as:
a means for making the inspection means brought close to the inspection target area of the inspection structure by controlling the moving means; and
a means for making the guide means brought into contact with the inspection structure, thereby guiding the inspection means by the guide means so that the inspection means is moved to the inspection target area of the inspection structure, to thereby inspect the wall surface of the inspection structure by the inspection means.

### [Advantageous Effects of Invention]

According to the present invention, the moving means can freely move in the space and easily inspect the wall surfaces of tunnels and bridges. Further, a guide means is provided for guiding the movement of the moving means on the inspection structure. As a result, the moving means can be reliably guided on the inspection structure and the defect inspection such as tapping the inspection structure can be performed.

### [Brief Description of Drawings]

FIG. 1 is a perspective diagram illustrating an entire configuration of a defect inspection device according to a first example embodiment of the present invention.
FIG. 2 is an explanatory diagram of a structure of the defect inspection device according to the first example embodiment of the present invention.
FIG. 3 is a block diagram illustrating an internal configuration of the defect inspection device according to the first example embodiment of the present invention.
FIG. 4 is a flowchart illustrating a defect inspecting operation using the defect inspection device according to the first example embodiment of the present invention.
FIG. 5 is an explanatory diagram of an arrangement position of each unit of the defect inspection device according to a first example embodiment of the present invention.
FIG. 6 is a perspective diagram illustrating a modified example of the defect inspection device according to the first example embodiment of the present invention.
FIG. 7 is an explanatory diagram of the structure of the defect inspection device according to a second example embodiment of the present invention.
FIG. 8A is an explanatory diagram of a wheel arrangement according to the second example embodiment of the present invention.
FIG. 8B is an explanatory diagram of a wheel arrangement according to the second example embodiment of the present invention.
FIG. 9 is an explanatory diagram of a modified example of the defect inspection device according to the second example embodiment of the present invention.
FIG. 10 is an explanatory diagram of a structure of the defect inspection device according to a third example embodiment of the present invention.
FIG. 11A is an explanatory diagram illustrating an effect of improving a positioning accuracy according to the third example embodiment of the present invention.
FIG. 11B is an explanatory diagram illustrating the effect of improving the positioning accuracy according to the third example embodiment of the present invention.

### [Description of Embodiments]

Hereinafter, example embodiments of the present invention will be described with reference to the drawings.

### <First example embodiment>

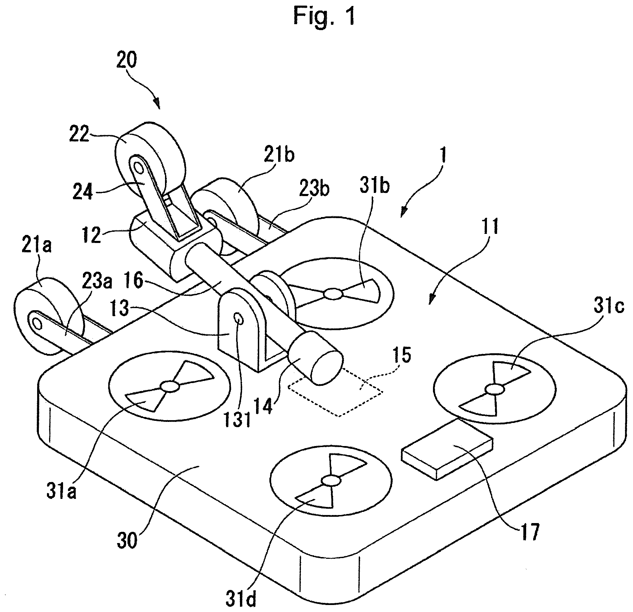

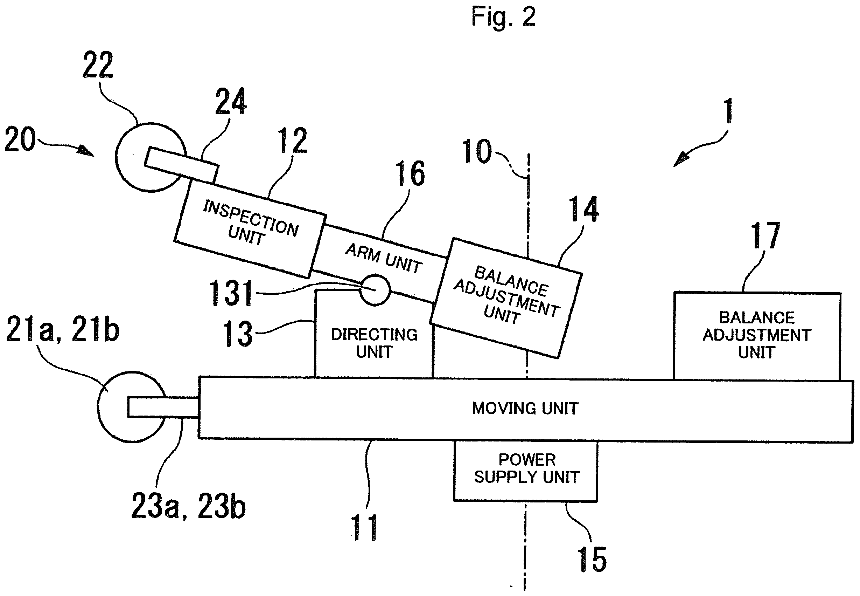

FIG. 1 is a perspective diagram illustrating an entire configuration of a defect inspection device 1 according to a first example embodiment of the present invention. FIG. 2 is an explanatory diagram of a structure of the defect inspection device according to the first example embodiment of the present invention. As illustrated in FIG. 1 and FIG. 2, the defect inspection device 1 according to the first example embodiment of the present invention includes: a moving unit 11, an inspection unit 12, a directing unit 13, a balance adjustment unit 14; a power supply unit 15, an arm unit 16, a balance adjustment unit 17, and a wheel unit 20.

As illustrated in FIG. 1, the moving unit 11 enables a space movement as a flying body by arranging plural rotary blades 31a to 31d on a base 30. In this example, four rotary blades 31a to 31 d are arranged on the base 30. When the rotary blades 31a to 31d are rotated, a lift force is generated, so that an entire defect inspection device 1 is floated as a flying body. Further, by controlling a rotational speed and the rotational direction of each of the rotary blades 31 a to 31 d, a flying height, a direction, a speed, etc. of the defect inspection device 1 can be freely controlled. As a result, the entire defect inspection device 1 can be brought close to a wall surface of an inspection target of an inspection structure such as a tunnel or a bridge. Here, four rotary blades 31a to 31d are arranged on the base 30. However, the number of rotary blades and the shape of the base 30 are not limited thereto.

The directing unit 13 is attached to the moving unit 11. The directing unit 13 is a gimbal that rotates in, for example, an azimuth (AZ) or an elevation (EL) direction. The arm unit 16 is rotatably attached to a rotation shaft 131 of the directing unit 13. The inspection unit 12 is attached to one end of the arm unit 16. The balance adjustment unit 14 is attached to the other end of the arm unit 16.

The inspection unit 12 inspects the wall surface of the inspection target area of the inspection structure. In this example, the inspection unit 12 taps the wall surface of the inspection target area of the inspection structure, monitors a sound from the wall surface generated by such tapping, and detects a defect state of the wall surface. The directing unit 13 is a unit that determines a direction and a position of the inspection unit 12 so that the inspection unit 12 is brought into contact with the wall surface which is an inspection target. The arm unit 16 is a unit that secures a distance from the rotation shaft 131 of the directing unit 13 to the tip of the inspection unit 12, so that the inspection unit 12 attached to one end of the arm unit 16 can be brought into contact with the inspection target.

As illustrated in FIG. 2, the directing unit 13 is attached to the moving unit 11, so as to be biased in either direction from a horizontal center line 10 of a fuselage of the moving unit 11. Specifically, in FIG. 2, for example when a left side is assumed to be a front side, the directing unit 13 is attached to the moving unit 11 so as to be biased in such a manner as approaching a front side end from a horizontal center line 10 of the fuselage of the moving unit 11. It is also acceptable that the directing unit 13 is attached to the moving unit 11 so as to be biased in a horizontally outward direction from a position of the center of gravity of the fuselage (base 30) of the moving unit 11 as a reference. Further, the arm unit 16 is attached to the rotation shaft 131 of the directing unit 13 so that the inspection unit 12 protrudes from the tip of the moving unit 11. The balance adjustment unit 14 is a counter weight for keeping a balance at a position of the rotation shaft 131 of the directing unit 13, with the inspection unit 12, the wheel 22, and the wheel supporting unit 24 attached thereto.

A power supply unit 15 is provided on the rear side of the moving unit 11. The power supply unit 15 is a wired power supply from, for example, a battery, a generator on the ground, or a household socket. Further, various circuit boards such as a control unit and a transmission unit / reception unit can be arranged in the portion of the power supply unit 15. The power supply unit 15 is arranged at a position of the center of gravity of the moving unit 11 so as not to affect a mass balance.

The balance adjustment unit 17 is a counter weight for keeping the mass balance at a horizontal center (or center of gravity) of the moving unit 11. In other words, in this example embodiment, wheels 21a and 21b, wheel supporting units 23a and 23b, a wheel 22, a wheel supporting unit 24, an inspection unit 12, an arm unit 16, a directivity unit 13, and a balance adjustment unit 14 are provided on a front side of the moving unit 11. For this reason, a weight of the front side becomes heavy. Therefore, in order to keep the mass balance at a horizontal center (or center of gravity) of the defect inspection device 1, the balance adjustment unit 17 is arranged on the rear side of the moving unit 11.

In this example, one balance adjustment unit 17 is arranged on the rear side of the moving unit 11. However, it is also acceptable to arrange the balance adjustment unit at the front, rear, right and left of the moving unit 11, for keeping the mass balance at the horizontal center (or center of gravity) of the moving unit 11.

Further, in this example, the power supply unit 15 is mounted at the center of the moving unit 11 so as not to affect the mass balance, but the power supply unit 15 is not required to be mounted at the center of the moving unit 11. In this case, the position and the weight of the balance adjustment unit 17 are determined such that the mass balance is kept at the horizontal center of the defect inspection device 1 including the power supply unit 15.

The wheel unit 20 guides a movement of the moving unit 11 on the inspection structure. In this example, the wheel unit 20 is composed of wheels 21a and 21b and a wheel 22. The wheels 21 a and 21 b are attached to a front end of the moving unit 11 via the wheel supporting units 23a and 23b. The wheels 21a and 21b are, for example, omni-wheels and are movable in an arbitrary direction. The wheel 22 is attached to the inspection unit 12 via the wheel supporting unit 24. The wheel 22 is, for example, an omni wheel and is movable in an arbitrary direction. The two wheels 21a and 21b mounted on the front side of the moving unit 11 and the one wheel 22 mounted on the inspection unit 12 are arranged so as to form a triangular plane.

The hammer mounted on the inspection unit 12 has a structure that can protrude from the wheel 22. Therefore, even when the wheel 22 are in contact with the wall surface to guide over the wall surface of the inspection target, the inspection unit 12 can tap the wall surface using the hammer. Further, the wheel 22 is mounted so as to have an offset in a vertical or a lateral direction at a tip of the inspection unit 12 so as not to interfere with a tapping motion of the hammer against the wall surface.

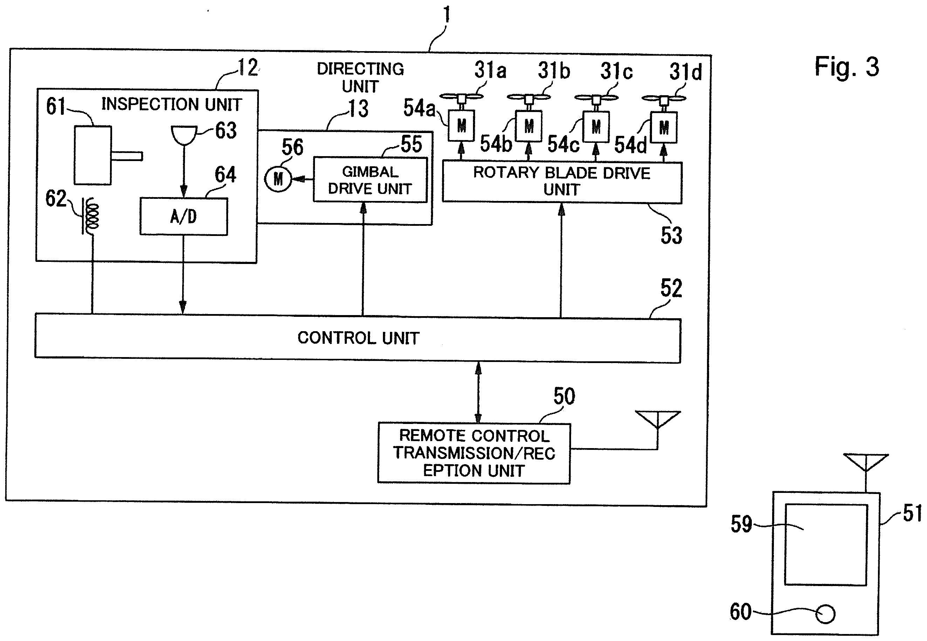

FIG. 3 is a block diagram illustrating an internal configuration of the defect inspection device 1 according to a first example embodiment of the present invention. Directions of arrows in the diagram show an example and don't limit a direction of a signal between blocks. In FIG. 3, a remote-control transmission unit / reception unit 50 transmits and receives an operation signal to / from a remote controller 51. The remote controller 51 is used when an operator remotely operates the defect inspection device 1 wirelessly. The remote controller 51 includes a display 59 and an operation unit 60. As the remote controller 51, a dedicated remote-controller may be provided, or a dedicated application may be installed in a general-purpose mobile terminal so that it can be used as a remote-controller. Further, various analyzers and monitors may be added to the remote controller 51. The control unit 52 controls an overall operation of the defect inspection device 1. A unit in which a CPU (Central Processing Unit) and various memories are integrated, can be used as the control unit 52. In this example, the defect inspection device 1 is remotely operated wirelessly by the remote controller 51. However, the defect inspection device 1 may be operated by wire.

A rotary blade drive unit 53 drives the rotary blade motors 54a to 54d. The rotary blade motors 54a to 54d are motors for rotating the rotary blades 31a to 31d. Drive signals are supplied to the rotary blade motors 54a to 54d from the control unit 52 via the rotary blade drive unit 53.

A gimbal drive unit 55 drives a gimbal motor 56. The gimbal motor 56 is a motor for rotating the a gimbal of the directing unit 13. A driving signal is supplied to the gimbal motor 56 from the control unit 52 via the gimbal drive unit 55.

A hammer 61, a solenoid 62, a microphone 63, and an A / D (Analog to Digital) converter 64 constitute the inspection unit 12. The hammer 61 performs tapping inspection by adding an impact to an inspection target. The solenoid 62 gives a force to tap the wall surface to be inspected using the hammer 61 and also to return the hammer 61 to an original position. The microphone 63 picks up the tapping sound generated at the time of tapping the wall surface using the hammer 61. The drive signal from the control unit 52 is supplied to the solenoid 62. Further, the sound picked up by the microphone 63 is inputted to the control unit 52 via the A / D converter 64, and processed by the control unit 52. Information regarding the picked up sound can be sent from the control unit 52 to the remote controller 51 side via the remote-control transmission unit / reception unit 50.

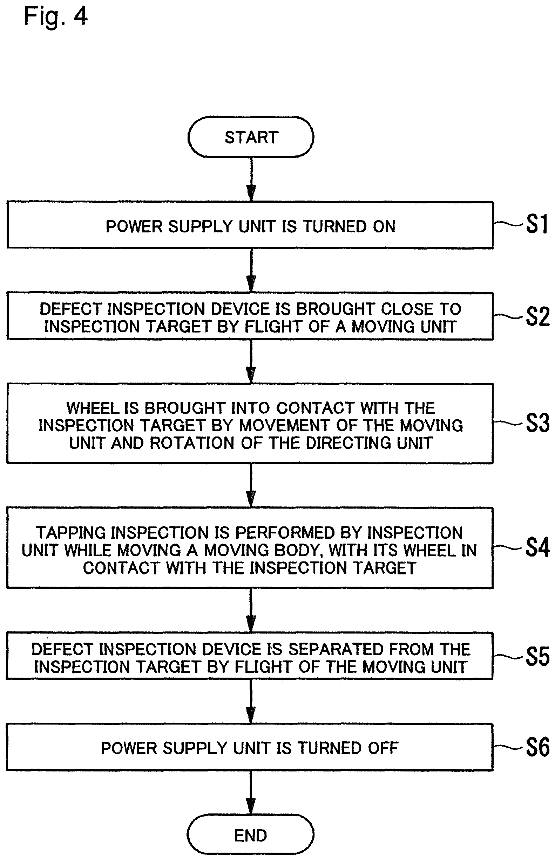

A defect inspecting operation using the defect inspection device 1 of this example embodiment will be described next. FIG. 4 is a flowchart illustrating the defect inspecting operation using the defect inspection device 1 according to the first example embodiment of the present invention.

First, the operator turns on the power supply unit 15 (step S1). Then, the operator operates the remote controller 51 to make the defect inspection device 1 brought close to the inspection target by a flight of the moving unit 11 (step S2). Then, the operator moves the directing unit 13 by operating the remote controller 51 to make the wheel unit 20 brought into contact with the inspection target (step S3). When the wheel unit 20 is brought into contact with the inspection target, the operator moves the defect inspection device 1 to a desired position while guiding the inspection target by the wheel unit 20 by operating the remote controller 51. Thereafter, the hammer 61 of the inspection unit 12 taps the inspection target, and the sound at that time is picked up by the microphone 63, to thereby perform defect inspection such as tapping (step S4). When the tapping inspection is ended, the operator separates the defect inspection device 1 from the inspection target by the flight of the moving unit 11 and makes it land at a predetermined position (step S5). Then, the operator turns off the power supply unit 15 and ends the inspection (step S6).

As described above, in the first example embodiment of the present invention, plural rotary blades 31a to 31d are arranged on the base 30 to constitute the moving unit 11, and the inspection unit 12 is arranged in this moving unit 11. As a result, the defect inspection such as tapping using the flying body can be performed, and the defect inspection can be easily performed over the wall surfaces of the tunnels and bridges at a low cost.

Further, in this example embodiment, as illustrated in FIG. 2, the directing unit 13 is mounted so as to be biased to the front side from the horizontal center line 10 of the fuselage of the moving unit 11. Therefore, a length of the arm unit 16 can be shortened, and a weight of the arm unit 16 can be reduced.

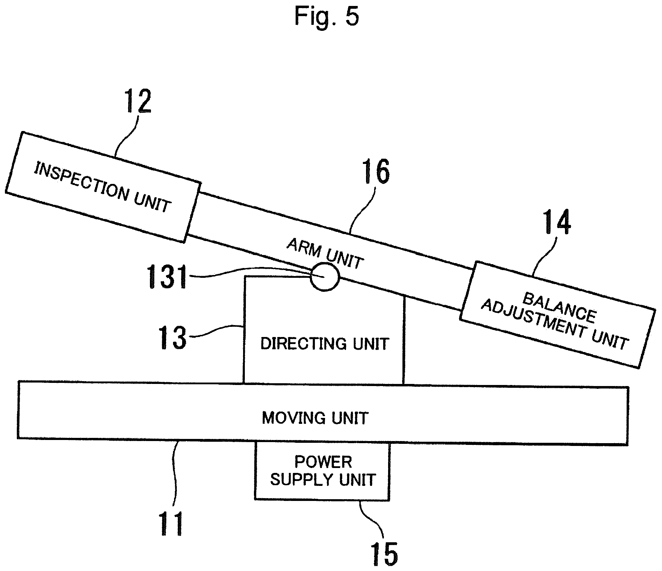

FIG. 5 is an explanatory diagram of the arrangement position of each unit of the defect inspection device related to the present invention. When the directing unit 13 is arranged on the moving unit 11, as illustrated in FIG. 5, it is conceivable to arrange the directing unit 13 at the center of the moving unit 11 in order not to affect the mass balance. However, when the directing unit 13 is arranged at the center of the moving unit 11, the inspection unit 12 cannot be brought into contact with position of the inspection target of the inspection structure, unless the arm unit 16 is made long. In contrast, in this example embodiment, as illustrated in FIG. 2, the directing unit 13 is mounted so as to be biased to the front side from the horizontal center line 10 of the fuselage of the moving unit 11, and therefore even when the length of the arm unit 16 is shortened, the inspection unit 12 can be brought into contact with the position of the inspection target of the inspection structure.

Further, in this example embodiment, the arm unit 16 whose weight is reduced, is mounted on the directing unit 13, and therefore a mounting weight of the directing unit 13 is reduced, and a structural strength of the directing unit 13 can be reduced. Therefore, the weight of the directing unit 13 can be reduced as well as the arm unit 16. Due to a weight reduction of the arm unit 16 and a weight reduction of the directing unit 13, the weight of the moving unit 11 can be reduced, and the structural strength of the moving unit 11 itself can also be reduced. Thus, the weight reduction is achieved. As a result, even when units (such as the wheels 21a and 21b, the wheel supporting units 23a and 23b, the inspection unit 12, the wheel 22, the wheel supporting unit 24, the directing unit 13, the power supply unit 15, the balance adjustment unit 14, the arm unit 16, and the balance adjustment unit 17) for performing defect inspection such as tapping are mounted on the moving unit 11, the moving unit 11 can be floated with a margin. Further, when a battery is installed in the power supply unit 15, the defect inspection can be performed while securing a sufficient flight time without installing a large capacity battery.

Further, in this example embodiment, the balance adjustment unit 14 is provided, with the inspection unit 12 attached thereto, so that the arm unit 16 keeps the mass balance at the position of the rotation shaft 131 of the directing unit 13. Therefore, the rotation shaft 131 of the directing unit 13 is arranged at the position of the center of gravity when the wheel 22, the wheel supporting unit 24, the inspection unit 12, the arm unit 16, and the balance adjustment unit 14 are regarded as one object. Thereby, generation of a counter torque due to the rotation of the arm unit 16 is preferably eliminated, and the variation of the attitude angle of the moving unit 11 is preferably reduced.

Further in this example embodiment, the two wheels 21a and 21b are mounted on the front side of the moving unit 11 and one wheel 22 is mounted on the inspection unit 12. Therefore, the wheels 21 a and 21b and the wheel 22 are brought into contact with the wall surface of the inspection target while floating the defect inspection device 1, and the defect inspection device 1 can be moved while guiding the movement by the wheels 21a and 21b and the wheel 22.
At this time, if the wheels are aligned on a straight line, the defect inspection device 1 may collide against the wall surface. In order to prevent the collision of the defect inspection device 1 against the wall surface, it is advisable to arrange at least three wheels on the plane. In this example, a triangular plane is formed by the wheel unit 20 and two wheels 21a and 21b on the front side of the moving unit 11 and one wheel 22 of the inspection unit 12. By controlling the moving unit 11 so that a resultant force of a forward thrust force and ascending and descending thrusts of the moving unit11 are included in the plane of the triangle formed by the wheels 21a and 21b and the wheel 22, the defect inspection devices 1 can be prevented from colliding against the wall surface. In this manner, according to this example embodiment, the moving body 11 that flies with a small number (at least three) of wheels can be guided, and therefore the weight of the moving unit 11 does not become heavy even when the wheels are mounted thereon, and the moving unit 11 can be floated with a margin.

In the abovementioned example, the triangular plane is formed by the two wheels 21 a and 21 b on the front side of the moving unit 11 and one wheel 22 of the inspection unit 12. However, manner of arranging the wheels in the moving unit 11 and the inspection unit 12 does not matter, as long as the triangular plane can be formed with a total of three wheels.

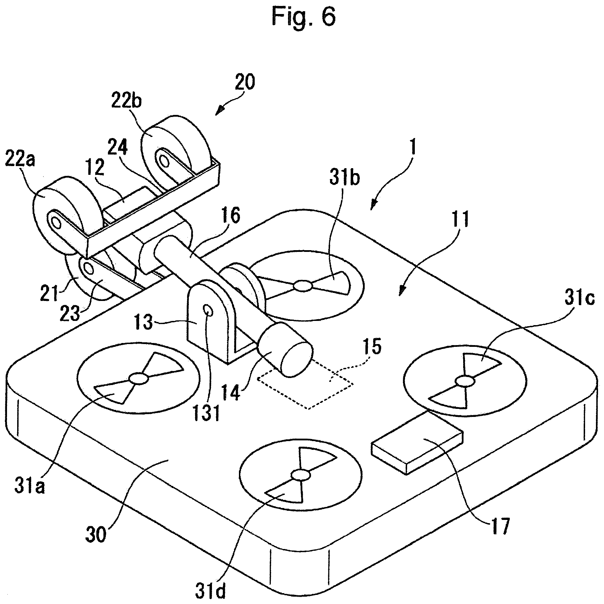

FIG. 6 is a perspective diagram illustrating a modified example of the defect inspection device according to the first example embodiment of the present invention. In the example of FIG. 6, one wheel 21 is provided on the front side of the moving unit 11 via the wheel supporting unit 23 and two wheels 22a and 22b are provided on the inspection unit 12 via the wheel supporting unit 24. In this case, a triangular plane is formed by one wheel 21 on the front side of the moving unit 11 and the two wheels 22a and 22b of the inspection unit 12.

In this example embodiment, a case of performing tapping inspection as a wall surface inspection by the inspection unit 12, has been described. However, the present invention is not limited to the tapping inspection, and a void inspection for an inside of a wall using ultrasonic pulses (Japanese Patent Laid-Open No. 2001-021541) or a defect inspection for an inside of a wall using lights such as infrared rays (Japanese Patent Application Laid-Open No. 2001-201474) may also be used.

Further, in this example embodiment, plural rotary blades 31a to 31d are arranged on the base 30 so that the moving unit 11 can move in the space. However, the configuration of the moving unit 11 is not limited to the configuration using the rotary blades, and the moving unit 11 having a fixed blade may also be used. By using the rotary blades, movement and hovering are enabled, thus enabling the movement to the inspection target to perform defect inspection such as tapping the inspection target.

In contrast, by using the fixed blades, although hovering is difficult, the defect inspection can be performed by moving to the inspection target with a high speed flight, and the defect inspection such as tapping can be performed with a low speed flight.

### <Second example embodiment>

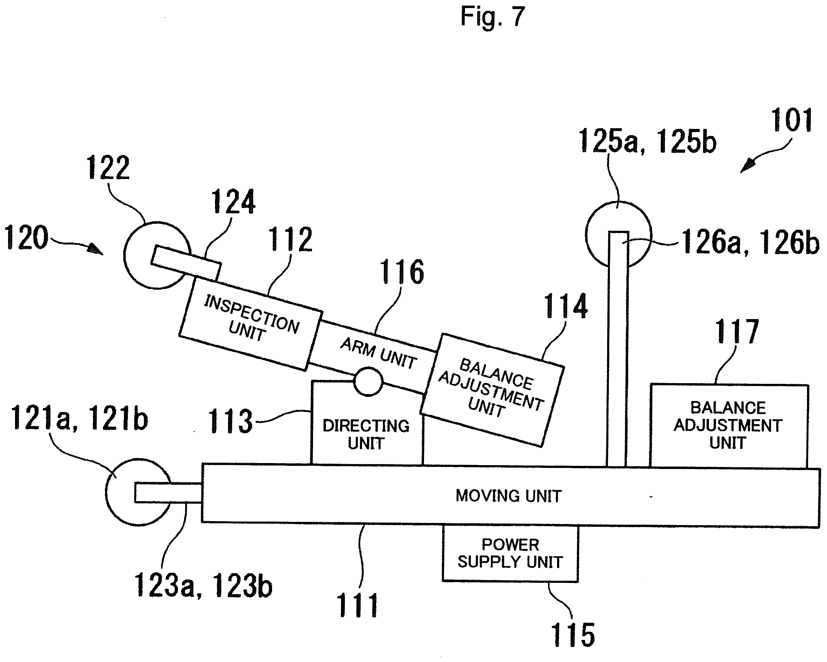

FIG. 7 is an explanatory diagram of the structure of the defect inspection device according to a second example embodiment of the present invention. A defect inspection device 101 according to the second example embodiment of the present invention includes: a moving unit 111, an inspection unit 112, a directing unit 113, a balance adjustment unit 114, a power supply unit 115, an arm unit 116, a balance adjustment unit 117, and a wheel unit 120. The wheel unit 120 further includes wheels 121 a and 121b, wheel supporting units 123a and 123b, a wheel 122, a wheel supporting unit 124, wheels 125a and 125b, and wheel supporting units 126a and 126b.

As illustrated in FIG. 1 and FIG. 2, according to the abovementioned first example embodiment, the wheel unit 20 is arranged at points of two wheels 21a and 21b mounted on the front side of the moving unit 11 and one wheel 22 mounted on the inspection unit 12, so as to form a triangular plane. In contrast, according to the second example embodiment, the wheels 125a and 125b are further mounted toward an upper side of the moving unit 111 via the wheel supporting units 126a and 126b.

In the inspection structure like a tunnel, the wall surface exists not only in a horizontal direction but also in a ceiling direction. In this case, the wheels cannot be brought into contact with the wall surface in the ceiling direction only by the two wheels 21a and 21b mounted on the front end of the moving unit 11 and one wheel 22 mounted on the inspection unit 12 as illustrated in the first example embodiment.

Therefore, in the second example embodiment, the wheels 125a and 125b are provided in an upward direction of the moving unit 111. The wheels 125a and 125b are, for example, omni-wheels and are movable in an arbitrary direction. By using one wheel 122 mounted on the inspection unit 12 and two wheels 125a and 125b mounted in the ceiling direction, the wheels can be brought into contact with the wall surface in the ceiling direction. Further, by arranging at least three of the wheels mounted on the defect inspection device 101 so as to form a triangle, the defect inspection device can be prevented from colliding against the wall surface. In this example, three wheels are selected from two wheels 121a and 121b mounted on the front side of the moving unit 111, one wheel 122 mounted on the inspection unit 112, and two wheels 125a and 125b mounted on the upper side of the moving unit 111. When three selected wheels form a triangular plane, collision of the defect inspection device 101 against the wall surface can be prevented.

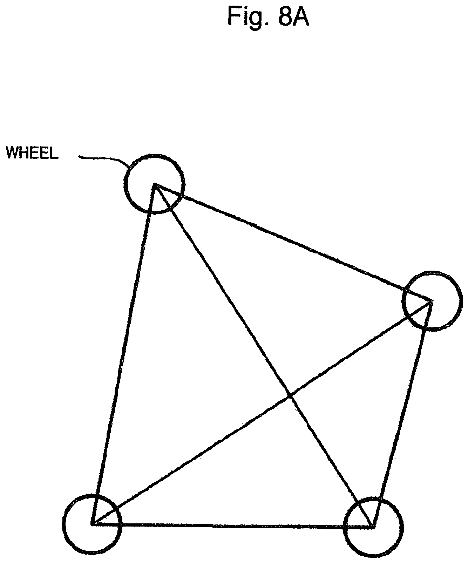

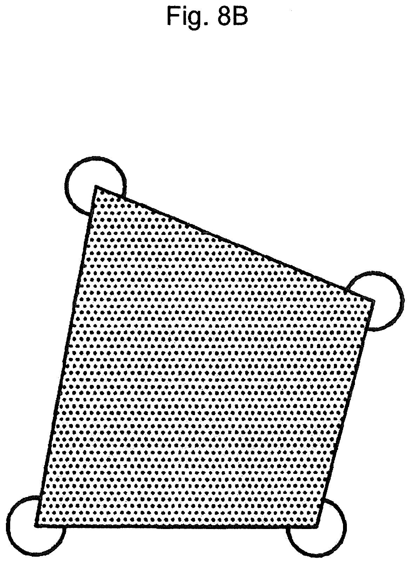

FIGs 8A and 8B are explanatory diagrams of a wheel arrangement according to a second example embodiment of the present invention. When triangles are made at three arbitrarily points extracted from the total number N of all wheels, _{N}C₃ triangles are formed (FIG. 8A). By controlling the moving unit 111 so that the resultant force of the forward thrust and the ascending and descending thrusts of the moving unit 111 is included in the surface painted with _{N}C₃ triangles (FIG. 8B), the defect inspection device 101 is prevented from colliding against the wall surface. In other words, each wheel is arranged so that all possible patterns of the resultant force of the forward thrust of the moving unit 111 and the ascending and descending thrusts of the moving unit 111 are included in a surface painted with all triangles which is created at three points arbitrarily extracted from the total number N of wheels. In this manner, the defect inspection device 101 is prevented from colliding against the wall surface.

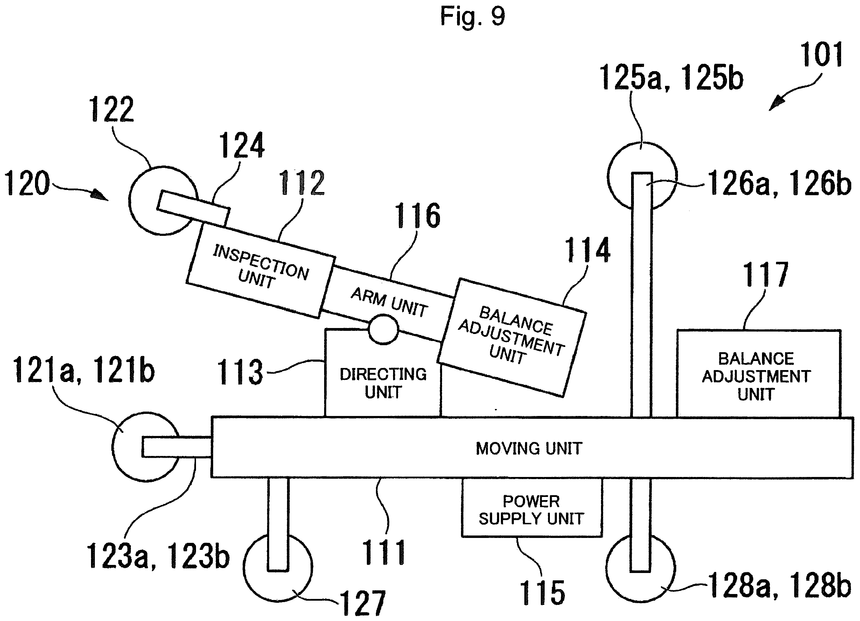

In the abovementioned example, the wheels 125a and 125b are provided in the upward direction of the moving unit 111 so that the wheels can move over the wall surface in the ceiling direction. FIG. 9 illustrates a modified example of the second example embodiment of the present invention. In the example of FIG. 9, the wheel 127 and the wheels 128a and 128b oriented in the ground direction are mounted on the moving unit 111 so that the wheels can move over the wall surface in the ground direction. In this example, a triangular plane is formed by the wheel 127 and the wheels 128a and 128b oriented in the ground direction so that the wheels are brought into contact with the wall surface in the ground direction.

### <Third example embodiment>

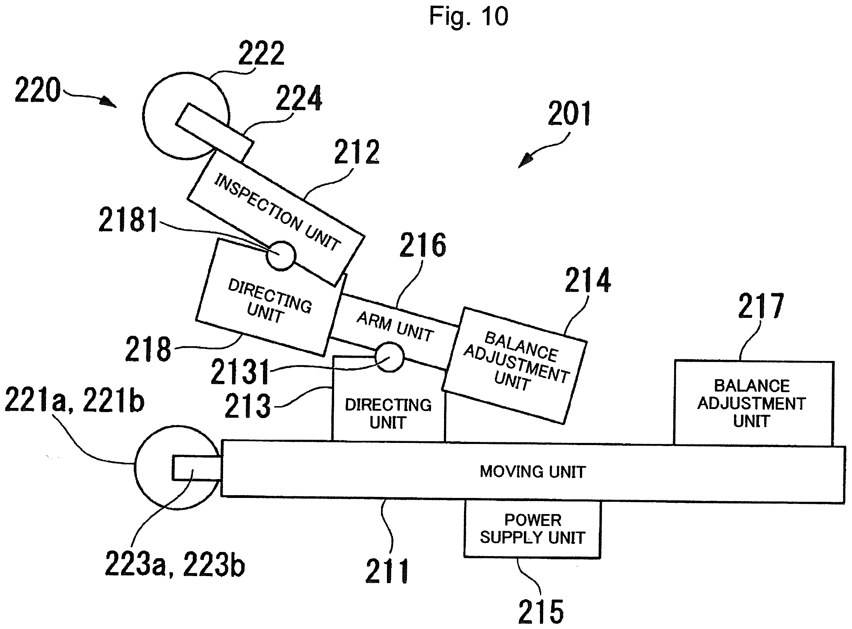

A third example embodiment will be described next. FIG. 10 is an explanatory diagram of the structure of the defect inspection device according to a third example embodiment of the present invention. As illustrated in FIG. 10, a defect inspection device 201 according to the third example embodiment of the present invention includes: a moving unit 211, an inspection unit 212, a directing unit 213, a balance adjustment unit 214, a power supply unit 215, an arm unit 216, a balance adjustment unit 217, a directivity unit 218, and a wheel unit 220. The moving unit 211, the inspection unit 212, the directing unit 213, the balance adjustment unit 214, the power supply unit 215, the arm unit 216, the balance adjustment unit 217, and the wheel unit 220, are configured similarly to the moving unit 11, the inspection unit 12, the directing unit 13, the balance adjustment unit 14, the power supply unit 15, the arm unit 16, the balance adjustment unit 17, the wheel unit 20 and the wheel unit 20 of the abovementioned first example embodiment.

In the abovementioned first example embodiment, as illustrated in FIG. 2, the inspection unit 12 and the wheel 22 are attached to one end of the arm part 16, and the balance adjustment unit 14 is attached to the other end of the arm unit 16. Then, the arm unit 16 is attached to the rotation shaft 131 of the directing unit 13.

In contrast, in the third example embodiment, the directing unit 218 is provided between the inspection unit 212 and the arm unit 216. Specifically, as illustrated in FIG. 10, the directing unit 218 is provided at one end of the arm unit 216, and the inspection unit 212 is attached to a rotation shaft 2181 of the directing unit 218 at one end of the arm unit 216. The wheel 222 is attached to the inspection unit 212 via the wheel supporting unit 224. The wheels 221 a and 221b are attached to the front end of the moving unit 211 via the wheel supporting units 223a and 223b.

The directing unit 218 is a gimbal that rotates in, for example, an azimuth (AZ) or an elevation (EL) direction. Further, by arranging the rotation shaft 2181 of the directing unit 218 at the position of the center of gravity of the inspecting unit 212, generation of the counter torque due to the rotation of the inspection unit 212 can be eliminated, and the variation of the attitude angle of the moving unit 211 can be reduced.

The balance adjustment unit 214 is a counterweight for keeping the mass balance at the position of the wheel 222, the wheel supporting unit 224, the inspection unit 212, the directing unit 218, and the arm unit 216 on a rotation shaft 2131 of the directing unit 213.

Therefore, the rotation shaft 2131 of the directing unit 213 is arranged.at the position of the center of gravity when the wheel 222, the wheel supporting unit 224, the inspection unit 212, the directing unit 218, the arm unit 216, and the balance adjustment unit 214 are regarded as one object. As a result, generation of a counter torque due to the rotation of the arm unit 216 is preferably eliminated, and the variation of the attitude angle of the moving unit 211 is preferably reduced.

The balance adjustment unit 217 is a counterweight for keeping the mass balance of the mass of the wheels 221a and 221b, the wheel supporting units 223a and 223b, the wheel 222, the wheel supporting unit 224, the inspection unit 212, the directing unit 218, the arm unit 216, the balance adjustment unit 214, the directing unit 213, and the power supply unit 215, at a horizontal center (or center of gravity) of the moving unit 211.

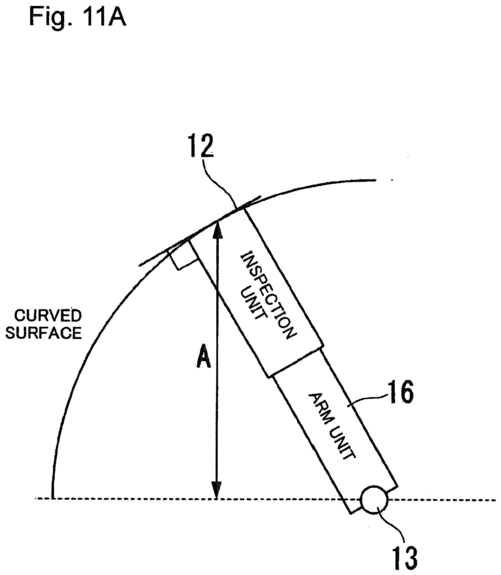

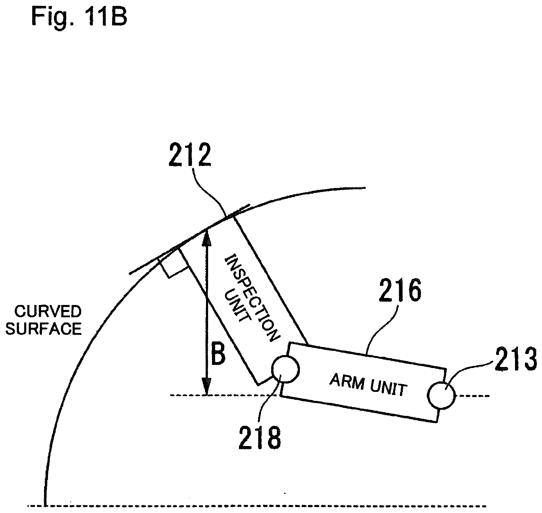

In the third example embodiment of the present invention, the directing unit 218 is provided at one end of the arm portion 216, and the inspection section 212 is attached to the rotation shaft 2181 of the directing section 218. Thereby, the positioning accuracy of the inspection unit 212 can be improved. This matter will be described below with reference to FIGS. 11A and 11B.

FIGS. 11A and 11B are explanatory diagrams illustrating the effect of improving the positioning accuracy by the directing unit 218. FIG. 11A illustrates an arrangement of each unit in the case of inspecting a curved wall of a tunnel, etc., in the first example embodiment illustrated in FIG. 2, and FIG. 11B illustrates an arrangement of each unit in the case of inspecting the curved wall of a tunnel, etc., in the third example embodiment illustrated in FIG. 10. In this example, only the inspection units 12 and 212 and the arm units 16 and 216 necessary for the explanation are displayed, and the description of the other configuration will be omitted.

As illustrated in FIG. 11A, in the first example embodiment illustrated in FIG. 2, when the inspection unit 12 is vertically pressed against the curved wall of the inspection structure such as a tunnel having a curved surface, the inspection unit 12 and the arm unit 16 are aligned on a straight line. Accordingly, a distance of a vertical line from the tip of the inspection unit 12 to the moving unit 11 is A.

In contrast, as illustrated in FIG. 11B, in the third example embodiment illustrated in FIG. 10, the directing unit 218 is provided. Therefore, when the inspection unit 212 is vertically pressed against a curved wall of the inspection structure such as a tunnel having a curved surface, an angle can be formed between the inspection unit 212 and the arm unit 216. Therefore, a distance of a vertical line from the tip of the inspection unit 212 to the moving unit 211 is B which can be made shorter than the distance A of the first example embodiment.

In the case of the flying body, there is a change in the attitude angle of the flying body, and the variation of its attitude angle becomes large especially when the wind is strong. As illustrated in FIG. 11A, in the configuration without the directing unit 218, the distance from the moving unit 11 to the inspection unit 12 becomes long. Therefore, the inspection unit 12 also swings due to the variation in the attitude angle of the flying body, and the positioning accuracy of the tip of the inspection unit 12 is deteriorated. In the worst case, the inspection unit 12 cannot be positioned in the area where the inspection of the curved wall is desired to be performed, and the tapping inspection cannot be performed.

In contrast, as illustrated in FIG. 11B, by providing the directing unit 218, the distance from the moving unit 211 to the inspection unit 212 can be shortened. As a result, even if the swing due to the change in the attitude angle of the flying body occurs, the swing at the tip of the inspection unit 212 becomes small, and deterioration of the positioning accuracy due to the variation of the attitude angle of the flying body can be improved.

A basic configuration of the defect inspection device of this example embodiment is as illustrated in FIG. 2. In other words, the feature of the defect inspection device of this example embodiment is that, it includes: the moving unit 11 capable of freely moving in the space; the inspection unit 12 that inspects the wall surface of the inspection target area of the inspection structure, the arm unit 16 to which the inspection unit 12 is attached at one end; the directing unit 13 that controls the direction of the inspection unit 12 by rotating the arm unit 16; and the wheel unit 20 that guides the movement of the moving unit 11 on the inspection structure.

In the first to third example embodiments, the balance adjustment unit 17 is provided. However, the balance adjustment unit 17 is not required to be provided if the center of gravity of the moving unit 11 is not at the center but on the opposite side of the inspection unit 12 interposing the center, or if the imaging unit 18 is provided at the end of the moving unit 11. Further, the balance adjustment unit 14 is not necessary if the opposite side of the inspection unit 12 of the arm unit 16 is extended. Further, although the power supply unit 15 is provided in the first example embodiment, the power supply unit 15 is not required if electric power is transmitted by wire or wireless.

Example embodiments of the present invention have been described above, with reference to the drawings. However, a specific configuration is not limited to these example embodiments, and design changes and the like within the scope not deviating from the gist of the present invention are included.

The present invention has been described above by exemplifying the abovementioned example embodiments as a typical example. However, the present invention is not limited to the example embodiments described above. Namely, the present invention can apply various aspects that can be understood by those skilled in the art within the scope of the present invention.

This application claims the priority based on Japanese Patent Application No. 2015-042177 filed on Mar. 4, 2015, the disclosure of which is incorporated herein in its entirety.

### [Reference signs List]

- 1: Defect inspection device
- 11: Moving unit
- 12: Inspection unit
- 13: Directing unit
- 14: Balance adjustment unit
- 15: Power supply unit
- 16: Arm unit
- 17: Balance adjustment unit
- 20:: Wheel unit
- 21:: Wheel
- 22A, 22B: Wheel
- 30:: Base
- 31a to 31d: Rotary blade

## Claims

1. A defect inspection device, comprising:
a moving means capable of freely moving in the space;
an inspection means for inspecting a wall surface of an inspection target area of an inspection structure;
an arm means to which the inspection means is attached at one end;
a directing means for controlling a direction of the inspection means by rotating the arm means; and
a guide means provided on the moving means, for guiding a movement of the moving means on the inspection structure.

2. The defect inspection device according to claim 1, wherein the guide means is composed of at least three wheels arranged at each vertex position of a planar triangle.

3. The defect inspection device according to claim 1 or 2, wherein the guide means is arranged at an end of the moving means and on the inspection means.

4. The defect inspection device according to claim 3, wherein the guide means is further arranged above or below the moving means.

5. The defect inspection device according to any one of claims 1 to 4, wherein each wheel of the guide means is arranged so that an entire pattern that can be taken by a resultant force of a forward thrust and ascending and descending thrusts of the moving means is included in a surface painted with a whole triangle which can be created with arbitrarily three points extracted from the total number N of the wheels of the guide means.

6. A defect inspection method using a defect inspection device comprising a moving means capable of freely moving in the space;
an inspection means for inspecting a wall surface of an inspection target area of an inspection structure;
an arm means to which the inspection means is attached at one end;
a directing means for controlling a direction of the inspection means by rotating the arm means; and
a guide means for guiding a movement of the moving means on the inspection structure, the method including:
making the inspection means brought close to the inspection target area of the inspection structure by the moving means;
making the guide means brought into contact with the inspection structure; and
making the guide means brought into contact with the inspection structure, and moving the inspection means to the inspection target area of the inspection structure by the guide means, to thereby inspect the wall surface of the inspection structure by the inspection means.

7. A recording medium recording a program which causes a computer of a defect inspection device including a moving means capable of freely moving in the space; an inspection means for inspecting a wall surface of an inspection target area of an inspection structure; an arm means to which the inspection means is attached at one end; a directing means for controlling a direction of the inspection means by rotating the arm means; and a guide means for guiding a movement of the moving means on the inspection structure, to function as:
a means for making the inspection means brought close to the inspection target area of the inspection structure by controlling the moving means; and
a means for making the guide means brought into contact with the inspection structure, thereby guiding the inspection means by the guide means so that the inspection means is moved to the inspection target area of the inspection structure, to thereby inspect the wall surface of the inspection structure by the inspection means.
